# FASCICULE DE BREVET EUROPEEN

(11) **EP 4 538 058 B1**
(45) Date de publication et mention de la délivrance du brevet: **25.03.2026**
(21) Numéro de dépôt: 23203183.1
(22) Date de dépôt: 12.10.2023
(51) Int. Cl.: B60C 7/06, B60B 19/00, B60B 21/12, B60C 7/10, B60C 7/14, B60C 7/18, B60C 17/04, B60B 9/00

(54) **ROUE DÉFORMABLE À SUPPORT DE CHARGE NON-PNEUMATIQUE ET À DISQUE DE BUTÉE ROTATIF POUR DES CONDITIONS LUNAIRES ET MARTIENNES**
LAUFRAD MIT METALLISCHEM BIEGEBAND FÜR BEDINGUNGEN AUF DEM MOND UND DEM MARS
DEFORMABLE WHEEL WITH NON-PNEUMATIC LOAD-BEARING AND ROTARY STOP DISC FOR LUNAR AND MARTIAN CONDITIONS

(43) Date de publication de la demande: 16.04.2025
(73) Titulaire: Venturi Lab SA, 1720 Corminboeuf (CH)
(72) Inventeur: OLSOMMER, David, 1616 ATTALENS (CH); BAUMGARTNER, Gérard, 1684 MEZIERES (CH); DELFINO, Antonio, 1772 GROLLEY (CH)
(74) Mandataire: Cabinet Beau de Loménie

(56) Documents cités:
- DE-A1- 4 124 398
- US-A1- 2019 217 665
- US-A1- 2023 241 919

## Description

### Arrière-plan de l'invention

La présente invention concerne une roue déformable à support de charge non-pneumatique. Plus particulièrement, l'invention concerne une roue qui supporte une charge avec ses composants structurels et qui a des capacités de performance adaptées à équiper un véhicule destiné à rouler dans des conditions extrêmes comme celles rencontrées sur la Lune et sur Mars.

La roue pneumatique possède des capacités de support de charge, d'absorption des chocs de la route et de transmission de force (accélérations, arrêts et changements de direction) qui sont particulièrement bien adaptées à de nombreux véhicules, notamment les bicyclettes, les motocyclettes, les automobiles et les camions. Les capacités d'absorption des chocs des pneumatiques sont également utiles dans d'autres applications, par exemple pour les chariots transportant des équipements médicaux ou du matériel électronique sensible.

Des alternatives à la roue pneumatique existent. On pourra par exemple citer les pneus pleins et les pneus à ressorts. Toutefois, ces alternatives ne présentent pas les avantages de performance des roues pneumatiques. En particulier, les pneus pleins reposent sur la compression de la partie en contact avec le sol pour supporter la charge. Ce type de pneus peut être lourd et rigide et n'a pas la capacité d'absorption des chocs des roues pneumatiques. Lorsqu'elles sont rendues plus élastiques, les roues non pneumatiques conventionnelles n'ont pas le support de charge ou l'endurance des roues pneumatiques.

Pour remédier à ces inconvénients, la publication US 7,418,988 propose un pneu à support structurel qui comprend une bande annulaire extérieure et une pluralité de rayons s'étendant transversalement et radialement vers l'intérieur depuis la bande annulaire jusqu'au moyeu de la roue et destinés à transmettre en tension les forces de charge entre la bande annulaire et le moyeu.

La roue structurellement supportée selon cette invention ne comporte pas de cavité destinée à contenir de l'air sous pression et n'a donc pas besoin de disposer d'un joint avec la jante de la roue pour conserver la pression d'air interne. Cette roue à support structurel ne nécessite donc pas de pneu au sens où on l'entend.

Les rayons de cette roue agissent en tension pour transmettre les forces de charge entre la roue et la bande annulaire, ce qui permet notamment de supporter la masse d'un véhicule. Les forces de support sont générées par la tension des rayons qui ne sont pas reliés à la partie de la bande annulaire en contact avec le sol. Les rayons transmettent également les forces requises pour l'accélération, l'arrêt et les virages.

Quelles que soient les alternatives connues de l'art antérieur pour la réalisation de roues non pneumatiques, celles-ci ne donnent généralement pas entière satisfaction, notamment lorsqu'elles sont destinées à rouler dans des conditions extrêmes comme celles rencontrées sur la Lune et sur Mars. En effet, avec de telles conditions, il est nécessaire que la roue puisse se déformer fortement au passage d'un obstacle tout en générant une pression de contact qui soit faible et uniforme pour permettre au véhicule de rester mobile sur un sol meuble tel que le sol que l'on rencontre sur la Lune et sur Mars.

On connaît de la demande de brevet EP22192685 déposée le 29 août 2022 par la Demanderesse une roue permettant de répondre à ces besoins du fait notamment de la présence d'une bande annulaire lamifiée qui comprend une pluralité de viroles concentriques qui sont assemblées avec interposition de couches d'interposition composées chacune d'un matériau dont le module de Young est de 600000 à 1000 fois inférieur à celui des viroles, par exemple en matériau élastomère. Sous une charge appliquée de l'extérieur, la partie de la bande lamifiée en contact avec le sol se déforme, non pas sous une forme essentiellement circulaire, mais sous une forme épousant la surface du sol tout en maintenant une longueur essentiellement constante des viroles. La roue selon cette demande de brevet permet ainsi de générer une pression de contact qui soit faible et uniforme au sol. De la sorte, le véhicule équipé de telles roues peut rester mobile (c'est-à-dire qu'il ne s'ensable pas) même sur un sol meuble (de type sable) tel que rencontré sur la Lune et sur Mars.

La roue décrite dans cette demande de brevet comprend également des disques solidaires du moyeu qui font saillie radialement vers l'extérieur pour former des butées permettant de limiter le déplacement de la bande de roulement de la roue. En effet, en fonction de la taille des obstacles sur lesquels passe la roue, la surface intérieure de la bande lamifiée peut venir en butée contre ces disques portés par le moyeu afin de limiter les déformations subies par la bande lamifiée.

Par ailleurs, suivant l'utilisation du véhicule, il peut être avantageux de pouvoir rouler sur de courtes distances et à vitesse réduite tout en transportant des charges telles que la surface intérieure de la bande lamifiée peut venir en butée de manière permanente contre les disques portés par le moyeu, même en l'absence d'obstacle.

Cependant, dans ces situations, du fait des différences de vitesse tangentielles notables existant entre la bande de roulement et les disques formant butée, la bande de roulement glisse sur les disques, ce qui peut détériorer les butées et altérer fortement la surface intérieure de la bande de roulement. L'intégrité de la roue est donc menacée.

La divulgation du document US 2019/217665-A1 est aussi pertinente pour comprendre l'invention.

### Objet et résumé de l'invention

La présente invention a donc pour but principal de pallier de tels inconvénients en proposant une structure de roue déformable à support de charge non-pneumatique qui dispose d'un dispositif permettant d'éviter toute altération de la bande de roulement lors d'une mise en butée de celle-ci.

Conformément à l'invention, ce but est atteint grâce à une roue déformable à support de charge non-pneumatique destinée à équiper un véhicule pour rouler en conditions extrêmes comme celles rencontrées sur la lune et sur Mars, comprenant :
un moyeu portant au moins un disque de butée qui fait saillie radialement vers l'extérieur,
une bande annulaire de roulement positionnée autour du moyeu et ayant une surface extérieure qui est destinée à être en contact avec le sol en étant apte à se déformer sous une charge appliquée de l'extérieur pour épouser la surface du sol, et une surface intérieure qui est apte à venir en appui contre le disque de butée afin de limiter les déformations de la bande de roulement selon des directions radiales, et
une pluralité de renforts radiaux reliant la bande de roulement au moyeu,
et dans laquelle, conformément à l'invention, le disque de butée est monté mobile en rotation sur le moyeu de façon à pouvoir être mis en rotation lorsque la surface intérieure de la bande de roulement vient en appui contre le disque de butée.

La roue selon l'invention est remarquable du fait que le disque de butée est monté mobile en rotation sur le moyeu, ce qui lui permet de « rouler » lorsque la bande de roulement vient en butée contre lui malgré les différences de vitesse. Ce système s'apparente ainsi à un dispositif de type roulement à billes qui entre en action uniquement lorsque la bande de roulement vient en contact avec la butée. Du fait de cette possibilité de roulement du disque de butée, les risques d'altération de la bande de roulement, et donc de la roue, sont fortement diminués.

De préférence, le disque de butée est monté sur une surface extérieure du moyeu par l'intermédiaire d'un roulement à rouleaux.

Dans ce cas, le roulement à rouleaux peut comprendre une pluralité de rouleaux cylindriques montés entre la surface extérieure du moyeu et une bande annulaire intérieure du disque de butée.

Le disque de butée peut comprendre une bande annulaire extérieure qui est montée autour de la bande intérieure par l'intermédiaire d'une pluralité de liaisons à ressorts.

Dans ce cas, les liaisons à ressorts peuvent être formées chacune par un anneau déformable.

L'anneau déformable des liaisons à ressorts est avantageusement composé d'enroulements d'une bande en acier inoxydable.

De préférence, chaque liaison à ressort comprend en outre une bague formant butée rigide montée à l'intérieur de l'anneau.

Les rouleaux cylindriques sont avantageusement régulièrement répartis sur la surface extérieure du moyeu autour d'un axe de rotation de la roue.

De préférence, la bande extérieure du disque de butée est revêtue d'une protection extérieure en cuir.

Le moyeu peut porter deux disques de butée qui espacés l'un de l'autre le long d'un axe de rotation de la roue.

La bande de roulement peut être une bande de cisaillement métallique comprenant une âme métallique munie d'ondulations prises en sandwich entre une virole et une pluralité de ressorts circonférentiels permettant permettre à la bande de roulement de pouvoir se déformer en flexion.

### Brève description des dessins

D'autres caractéristiques et avantages de la présente invention ressortiront de la description faite ci-dessous, en référence aux dessins annexés qui en illustrent un exemple de réalisation dépourvu de tout caractère limitatif. Sur les figures :
- la figure 1 est une vue schématique et de face d'une roue selon un mode de réalisation de l'invention ;
- la figure 2 est une vue en perspective et en coupe transversale de la roue de la figure 1 ; et
- la figure 3 est une vue en coupe transversale de la roue de la figure 1.

### Description détaillée de modes de réalisation

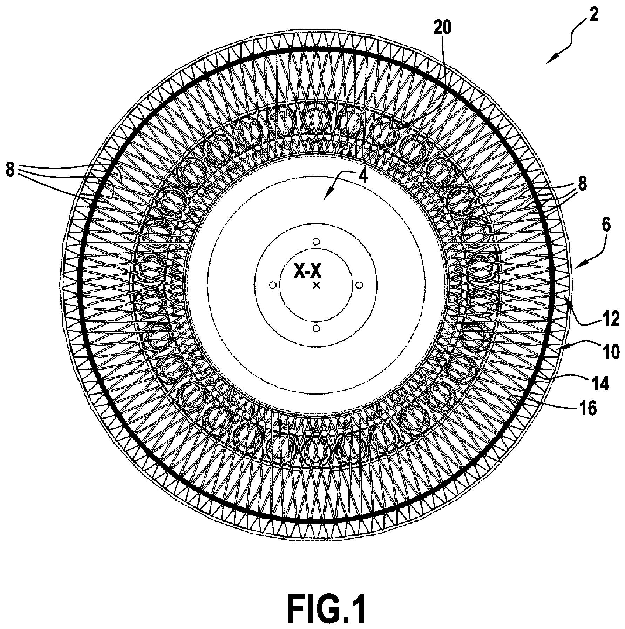

L'invention concerne une roue déformable à support de charge non-pneumatique telle que représentée sur la figure 1 qui est adaptée à équiper un véhicule destiné à rouler dans des conditions extrêmes comme celles rencontrées sur la Lune et sur Mars.

La roue 2 représentée sur la figure 1 comprend principalement un moyeu 4, une bande annulaire de roulement 6 ayant une surface extérieure qui est destinée à être en contact avec le sol en étant apte à se déformer sous une charge appliquée de l'extérieur pour épouser la surface du sol, et une pluralité de renforts radiaux (ici des câbles métalliques 8) reliant radialement le moyeu à la bande de roulement.

Dans ce mode de réalisation, la bande de roulement 6 est une bande de flexion qui comprend une âme 10 métallique munie d'une pluralité d'ondulations 12 prises en sandwich entre une virole 14 et une pluralité de ressorts 16 circonférentiels permettant à la bande de roulement de pouvoir se déformer en flexion.

Plus précisément, comme représenté sur 2 et 3, les ondulations 12 de l'âme 10 de la bande de roulement sont formées à partir de tôles métalliques qui sont pliées en V dans le sens longitudinal (c'est-à-dire parallèlement à l'axe longitudinal de rotation X-X de la roue 2).

On notera que la pointe en V des tôles métalliques qui forment les ondulations 12 est tournée vers l'intérieur de la roue (c'est-à-dire vers l'axe de rotation X-X de celle-ci) et s'évasent vers l'extérieur de la roue.

On notera également que chaque ondulation 12 de l'âme de la bande de roulement est symétrique par rapport à un plan P radial à la roue (et passant par la pointe en V de l'ondulation).

On notera encore que les tôles métalliques qui composent les ondulations présentent avantageusement des trous 18 qui sont répartis sur toute leur longueur afin d'alléger le poids de la roue.

La virole 14 de la bande de roulement 6 de la roue selon ce mode de réalisation est réalisée en métal ou en matériau composite (par exemple à fibres de verre ou à fibres de carbone).

Enfin, la bande de roulement 6 de la roue selon ce mode de réalisation comprend une pluralité de ressorts 16 circonférentiels permettant à la bande de roulement de pouvoir se déformer en flexion.

Comme indiqué précédemment, dans ce mode de réalisation, les renforts radiaux reliant radialement le moyeu 4 de la roue à la bande de roulement 6 sont composés par des câbles métalliques 8.

On notera également qu'à la place de câbles métalliques, les renforts radiaux reliant radialement le moyeu 4 de la roue à la bande de roulement 6 peuvent être composés de ressorts (ce mode de réalisation n'est pas représenté sur les figures).

De même, dans un autre mode de réalisation (non représenté sur les figures), la bande de roulement est une bande annulaire lamifiée comprenant une pluralité de viroles concentriques qui sont assemblées avec interposition de couches d'interposition composées chacune d'un matériau dont le module de Young est de 600000 à 1000 fois inférieur à celui des viroles.

Les viroles d'une telle bande lamifiée peuvent être réalisées en métal ou en matériau composite, tandis que les couches d'interposition peuvent être composées d'un élastomère hyperélastique ayant une température de transition vitreuse inférieure à 120°C.

On pourra se référer à la demande de brevet EP22192685 déposée le 29 août 2022 par la Demanderesse qui décrit une telle architecture de roue à bande de roulement lamifiée.

Quel que soit le mode de réalisation, le moyeu 4 de la roue porte au moins un disque de butée 20 qui fait saillie radialement vers l'extérieur de la roue.

Lorsque la surface du sol sur laquelle roule la roue 2 présente un obstacle important (par exemple un rocher), la partie de la bande de roulement 6 qui est en contact avec le sol se déforme pour épouser le profil de l'obstacle. Dans une telle situation, en fonction de la taille de l'obstacle, la surface intérieure de la bande de roulement peut venir en butée contre le diamètre extérieur du disque de butée 20 portés par le moyeu 4 afin de limiter les déformations subies par la bande de roulement. Une situation similaire est possible lors d'un roulage à faible vitesse et sous forte surcharge.

Selon l'invention, le disque de butée 20 est monté mobile en rotation sur le moyeu 4 de façon à pouvoir être mis en rotation autour de l'axe X-X de la roue lorsque la surface intérieure de la bande de roulement 6 vient en appui contre le disque de butée.

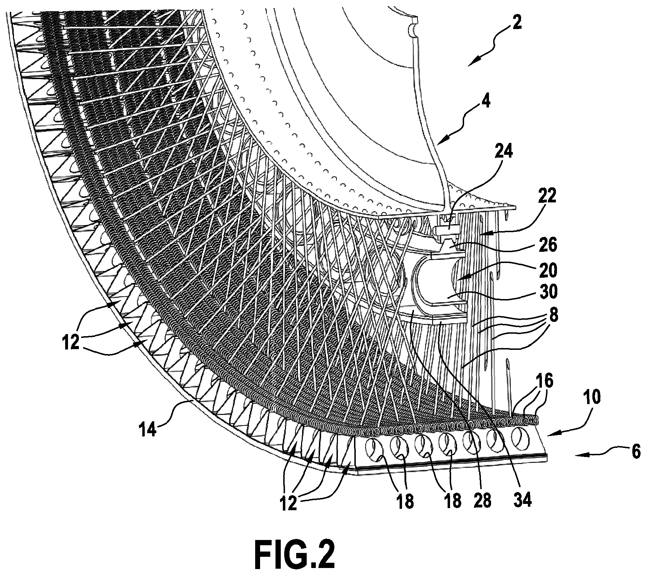

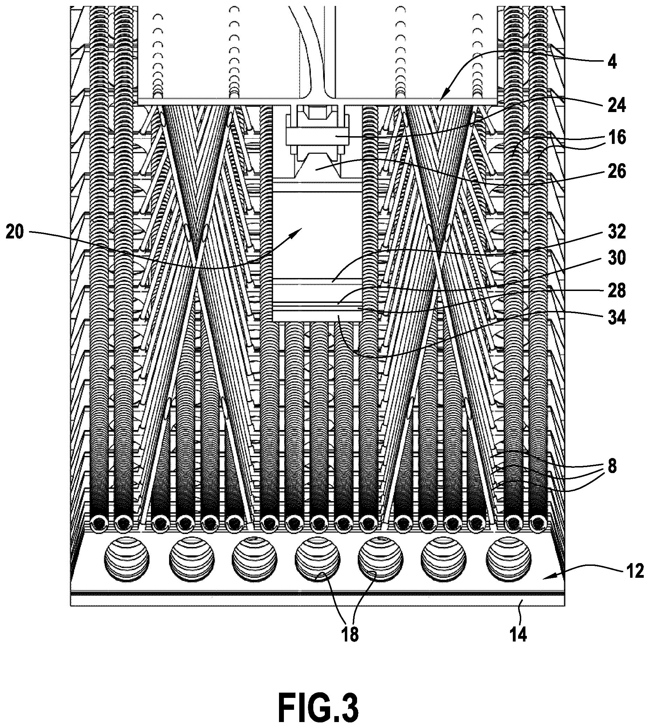

Plus précisément, dans le mode de réalisation des figures 1 à 3, le disque de butée 20 est monté sur une surface extérieure du moyeu 4 par l'intermédiaire d'un roulement à rouleaux 22.

Ce roulement à rouleaux 22 comprend de préférence une pluralité de rouleaux cylindriques 24 qui sont montés entre la surface extérieure du moyeu 4 et une bande annulaire intérieure 26 du disque de butée. Les rouleaux cylindriques 24 sont régulièrement répartis tout autour de l'axe de rotation X-X de la roue.

De la sorte, lorsque la surface intérieure de la bande de roulement 6 vient en butée contre le diamètre extérieur du disque de butée 20 (notamment lorsque la roue roule sur un obstacle important), celui-ci peut rouler autour du moyeu et ceci malgré les différences de vitesses de rotation du moyeu et de la bande de roulement.

Selon une disposition avantageuse, le disque de butée 20 comprend également une bande annulaire extérieure 28 qui est montée autour de la bande intérieure 26 par l'intermédiaire d'une pluralité de liaisons à ressorts 30.

Dans le mode de réalisation des figures 1 à 3, les liaisons à ressorts sont formées chacune par un anneau déformable 30, avantageusement composé de plusieurs enroulements d'une bande en acier inoxydable (par exemple douze enroulements d'une bande d'épaisseur de 0,15mm). En alternative, ces anneaux peuvent être réalisés en matériaux composites de type fibre de verre - résine.

On notera que les anneaux déformables 30 sont de préférence régulièrement répartis tout autour de l'axe de rotation X-X de la roue.

Selon une autre disposition avantageuse, chaque liaison à ressort comprend en outre une bague 32 formant butée rigide qui est montée à l'intérieur de l'anneau 30.

Cette bague 32 peut être fixée côté bande intérieure 26 du disque de butée ou côté bande extérieure 28 du disque de butée. Elle permet d'éviter que les anneaux déformables 30 ne se déforment trop en cas de forte déformation de la bande de roulement.

Selon encore une autre disposition avantageuse, la bande extérieure 28 du disque de butée est revêtue d'une protection extérieure 34 par exemple en cuir.

Dans un autre mode de réalisation non représenté, le moyeu de la roue porte deux disques de butée qui espacés l'un de l'autre le long de l'axe de rotation X-X de la roue.

## Revendications

1. Roue (2) déformable à support de charge non-pneumatique destinée à équiper un véhicule pour rouler en conditions extrêmes comme celles rencontrées sur la lune et sur Mars, comprenant :
un moyeu (4) portant au moins un disque de butée (20) qui fait saillie radialement vers l'extérieur,
une bande annulaire de roulement (6) positionnée autour du moyeu et ayant une surface extérieure qui est destinée à être en contact avec le sol en étant apte à se déformer sous une charge appliquée de l'extérieur pour épouser la surface du sol, et une surface intérieure qui est apte à venir en appui contre le disque de butée afin de limiter les déformations de la bande de roulement selon des directions radiales, et
une pluralité de renforts radiaux (8) reliant la bande de roulement au moyeu,
**caractérisée en ce que** le disque de butée (20) est monté mobile en rotation sur le moyeu de façon à pouvoir être mis en rotation lorsque la surface intérieure de la bande de roulement vient en appui contre le disque de butée.

2. Roue selon la revendication 1, dans laquelle le disque de butée (02) est monté sur une surface extérieure du moyeu (4) par l'intermédiaire d'un roulement à rouleaux (22).

3. Roue selon la revendication 2, dans laquelle le roulement à rouleaux (22) comprend une pluralité de rouleaux cylindriques (24) montés entre la surface extérieure du moyeu et une bande annulaire intérieure (26) du disque de butée (20).

4. Roue selon la revendication 3, dans laquelle le disque de butée (20) comprend une bande annulaire extérieure (28) qui est montée autour de la bande intérieure (26) par l'intermédiaire d'une pluralité de liaisons à ressorts (30).

5. Roue selon la revendication 4, dans laquelle les liaisons à ressorts sont formées chacune par un anneau déformable (30).

6. Roue selon la revendication 5, dans laquelle l'anneau déformable (30) des liaisons à ressorts est composé d'enroulements d'une bande en acier inoxydable.

7. Roue selon l'une des revendications 5 et 6, dans laquelle chaque liaison à ressort comprend en outre une bague (32) formant butée rigide montée à l'intérieur de l'anneau (30).

8. Roue selon l'une quelconque des revendications 3 à 7, dans laquelle les rouleaux cylindriques (24) sont régulièrement répartis sur la surface extérieure du moyeu (4) autour d'un axe de rotation (X-X) de la roue.

9. Roue selon l'une quelconque des revendications 3 à 8, dans laquelle la bande extérieure (28) du disque de butée (20) est revêtue d'une protection extérieure (34) en cuir.

10. Roue selon l'une quelconque des revendications 1 à 9, dans laquelle le moyeu (4) porte deux disques de butée qui espacés l'un de l'autre le long d'un axe de rotation (X-X) de la roue.

11. Roue selon l'une quelconque des revendications 1 à 10, dans laquelle la bande de roulement (6) est une bande de cisaillement métallique comprenant une âme métallique (10) munie d'ondulations (12) prises en sandwich entre une virole (14) et une pluralité de ressorts (16) circonférentiels permettant permettre à la bande de roulement de pouvoir se déformer en flexion.

## Patentansprüche

1. Verformbares, nicht-pneumatisches, lasttragendes Rad (2), das ausgelegt ist, um ein Fahrzeug auszustatten, um unter extremen Bedingungen wie denjenigen zu fahren, die auf dem Mond und dem Mars angetroffen werden, umfassend:
einer Nabe (4), umfassend mindestens eine Anschlagscheibe (20), die radial nach außen vorsteht,
eine ringförmige Lauffläche (6) die um die Nabe positioniert ist und eine Außenfläche aufweist, die ausgelegt ist, um mit dem Boden in Kontakt zu sein, und geeignet ist, um sich unter einer von außen angewendeten Belastung zu verformen, um sich an die Oberfläche des Bodens anzupassen, und einer Innenfläche, die geeignet ist, um an die Anschlagscheibe anzuliegen, um die Verformungen der Lauffläche in radialen Richtungen zu begrenzen, und
eine Vielzahl von radialen Verstärkungen (8), die die Lauffläche mit der Nabe verbinden,
**dadurch gekennzeichnet, dass** die Anschlagscheibe (20) drehbeweglich auf der Nabe montiert ist, um in Drehung versetzt werden zu können, wenn die Innenfläche der Lauffläche gegen die Anschlagscheibe anliegt.

2. Rad nach Anspruch 1, wobei die Anschlagscheibe (02) mit Hilfe eines Wälzlagers (22) auf einer Außenfläche der Nabe (4) montiert ist

3. Rad nach Anspruch 2, wobei das Wälzlager (22) eine Vielzahl von zylindrischen Rollen (24) umfasst, die zwischen der Außenfläche der Nabe und einem inneren ringförmigen Streifen (26) der Anschlagscheibe (20) montiert sind.

4. Rad nach Anspruch 3, wobei die Anschlagscheibe (20) einen ringförmigen äußeren Streifen (28) umfasst, der mit Hilfe einer Vielzahl von Federgliedern (30) um den inneren Streifen (26) montiert ist.

5. Rad nach Anspruch 4, wobei die Federglieder jeweils aus einem verformbaren Ring (30) gebildet sind.

6. Rad nach Anspruch 5, wobei der verformbare Ring (30) der Federglieder aus Wicklungen eines Edelstahlstreifens zusammengesetzt ist.

7. Rad nach einem der Ansprüche 5 und 6, wobei jedes Federglied außerdem eine Buchse (32) umfasst, die einen starren Anschlag bildet, der im Inneren des Rings (30) montiert ist.

8. Rad nach einem der Ansprüche 3 bis 7, wobei die zylindrischen Rollen (24) gleichmäßig auf der Außenfläche der Nabe (4) um eine Drehachse (X-X) des Rads verteilt sind.

9. Rad nach einem der Ansprüche 3 bis 8, wobei der äußere Streifen (28) der Anschlagscheibe (20) mit einem äußeren Schutzbezug (34) aus Leder überzogen ist.

10. Rad nach einem der Ansprüche 1 bis 9, wobei die Nabe (4) zwei Anschlagscheiben trägt, die entlang einer Drehachse (X-X) des Rads voneinander beabstandet sind.

11. Rad nach einem der Ansprüche 1 bis 10, wobei die Lauffläche (6) ein metallischer Scherstreifen ist, der einen metallischen Kern (10) umfasst, der mit Wellen (12) versehen ist, die zwischen einer Zwinge (14) und einer Vielzahl von umlaufenden Federn (16) eingebettet sind, die es der Lauffläche ermöglichen, sich biegeverformen zu können.

## Claims

1. A deformable wheel (2) with non-pneumatic load bearing intended to equip a vehicle for rolling under extreme conditions such as those encountered on the Moon and on Mars, comprising:
a hub (4) bearing at least one stop disc (20) which projects radially outwards:
an annular tread layer (6) positioned around the hub and having an outer surface which is intended to be in contact with the ground, being able to deform under an externally applied load in order to match the surface of the ground, and an inner surface which is able to come to bear against the stop disc in order to limit the deformation of the tread layer in the radial direction, and
a plurality of radial reinforcements (8) linking the tread layer to the hub,
**characterised in that** the stop disc (20) is rotatably mounted on the hub in such a way as to be able to be rotated when the inner surface of the tread layer comes to bear against the stop disc.

2. The wheel according to claim 1, wherein the stop disc (20) is mounted on an outer surface of the hub (4) by means of a roller bearing (22).

3. The wheel according to claim 2, wherein the roller bearing (22) comprises a plurality of cylindrical rollers (24) mounted between the outer surface of the hub and an inner annular strip (26) of the stop disc (20).

4. The wheel according to claim 3, wherein the stop disc (20) comprises an outer annular strip (28) which is mounted around the inner strip (26) by means of a plurality of spring connections (30).

5. The wheel according to claim 4, wherein the spring connections are each formed by a deformable ring (30).

6. The wheel according to claim 5, wherein the deformable ring (30) of the spring connections is composed of windings of a stainless-steel strip.

7. The wheel according to one of claims 5 and 6, wherein each spring connection further comprises a bushing (32) forming a rigid stop mounted inside the ring (30).

8. The wheel according to any one of claims 3 to 7, wherein the cylindrical rollers (24) are regularly distributed on the outer surface of the hub (4) around an axis of rotation (X-X) of the wheel.

9. The wheel according to any one of claims 3 to 8, wherein the outer strip (28) of the stop disc (20) is covered with an outer protection (34) made of leather.

10. The wheel according to any one of claims 1 to 9, wherein the hub (4) bears two stop discs spaced apart from one another along an axis of rotation (X-X) of the wheel.

11. The wheel according to any one of claims 1 to 10, wherein the tread layer (6) is a metal shear strip comprising a metal core (10) provided with corrugations (12) sandwiched between a ferrule (14) and a plurality of circumferential springs (16) giving the tread layer the ability to deform in flexion.
